# NEW EUROPEAN PATENT SPECIFICATION

(11) **EP 3 145 290 B2**
(45) Date of publication and mention of the opposition decision: **16.11.2022**
(45) Mention of the grant of the patent: 09.05.2018
(21) Application number: 15724607.5
(22) Date of filing: 20.05.2015
(51) Int. Cl.: A01D 75/18

(54) **SECURITY SENSOR**
SICHERHEITSSENSOR
CAPTEUR DE SÉCURITÉ

(30) Priority: 21.05.2014 BE 201400390
(43) Date of publication of application: 29.03.2017
(73) Proprietor: CNH Industrial Belgium nv, 8210 Zedelgem (BE)
(72) Inventor: JONGMANS, Dré W. J., 4791 AG Klundert (NL); VIAENE, Karel M. C., 8890 Moorslede (BE); MISSOTTEN, Bart M. A., 3020 Herent (BE)
(74) Representative: Caspary, Karsten
(86) International application number: PCT/EP2015/061070
(87) International publication number: WO 2015/177188

(56) References cited:
- EP-A1- 1 731 983
- EP-A2- 1 405 556
- EP-A2- 2 301 322
- WO-A1-82/01256
- DE-A1-102010 041 490
- FR-A1- 2 959 719

## Description

The present invention relates to an agricultural harvester, particularly a combine harvester, with a sensor, wherein the sensor is provided to recognize a dangerous situation so that a warning signal can be output based on the measurements of the sensor.

Such sensors are generally known in the form of parking sensors. Parking sensors are mounted on various types of vehicles to assist a driver while driving backwards or while performing parking maneuvers. To this end, parking sensors are placed on the vehicle, which parking sensors are adapted to detect an object in the surroundings of the vehicle, and to send a warning signal to the driver of the vehicle when the object is in a danger zone of (in practice meaning close to) the vehicle.

Such parking sensors have been tested on agricultural harvesters, as described in JPH0823752, with expected results. However, due to the specific nature of an agricultural harvester (which is typically provided with rear wheel steering, and which harvester comprises an unloading tube extending from the harvester), many dangerous situations cannot be prevented with the known parking sensors. FR 2959719 A1 describes a device for providing driving assistance for e.g. a car. The device has an analyzing unit for analyzing a set of data representing the environment of the vehicle to determine information representing a potential danger. A collision risk is defined between the vehicle and a movable element such as person, animal and other vehicle, or a fixed element such as pavement, post, building, fence, object, wall and bollard. A warning unit warns the user of the detected risk.

For an operator of an agricultural harvester, it is difficult to estimate the distance between the end of the unloading tube and an object behind the harvester, using just a mirror or a rearview camera. In practice, this often means the operator needs to exit the cabin to check what the real distance is in order to prevent a collision. Additionally, due to the rear wheel steering of the harvester, the rear swings out when taking a turn making it difficult to estimate if an object on the side of the harvester will be hit when taking a turn. Thereby, the sharper the turn and the longer the most rearward point of the harvester (most often formed by the tip of the unloading tube), the greater the swing-out effect. This can cause an inexperienced operator to hit an object such as a person, a tree or a building when taking a turn.

It is an object of the invention to provide a sensor system to the combine harvester that sends a warning signal to the operator when a dangerous situation occurs, and which is improved with respect to conventional parking sensor systems.

To this end the combine harvester of the invention comprises the features of claim 1.

According to the invention, the danger zone is linked to harvester driving parameter values or parameter value ranges. Thereby, multiple different danger zones are defined and linked to corresponding multiple different sets of harvester driving parameter values. This significantly improves the warning possibilities of the system, as this allows the danger zone to be at least partly dynamically defined. Indeed, an object that is present at a position in the surroundings of the harvester can be outside of a first danger zone when the harvester has a first set of driving parameter values, while being inside a second danger zone when the harvester adopts a different set of driving parameter values. A simple example is a person that is standing next to the cabin (and thus next to the combine harvester). When the combine harvester is in forward driving mode, this person is not in a danger zone since this person will not be hit by the combine harvester when the combine harvester drives straight forward. However, when the combine harvester is set to make a turn or in rear driving mode, due to the rear wheel steering of the harvester, the person will likely be hit by the harvester (depending on the steering direction and the distance between the object and the harvester), and thus the person is in a danger zone. This example makes clear that a same person standing on a same position in the surroundings of the harvester will in one situation be in a danger zone, and in another situation not be in a danger zone. The combine harvester with the sensor system of the invention allows, due to the implementation of dynamic danger zones, to warn an operator in a multitude of dangerous situations while not unnecessarily sending warning signals.

Preferably the harvester driving parameter values comprise a harvester steering wheel position. Since combine harvesters are typically provided with rear wheel steering, it is difficult for an operator to estimate how the position of the harvester will change when driving the harvester while steering. By defining multiple danger zones depending on multiple steering wheel positions, the operator of the harvester is assisted with respect to object collision while steering the harvester.

Preferably the harvester driving parameter values comprise an unloading tube position. The unloading tube of a combine harvester typically forms the most rearward point of the harvester. Furthermore, the unloading tube is typically movable so that the unloading tube can be positioned with respect to a storage tank wherein the harvester unloads the harvest. It will be clear to a skilled person that different positions of the unloading tube will result in different collision risks and corresponding different danger zones. Furthermore, the unloading tube position can in most cases not be clearly seen by the operator of the harvester. Therefore dynamically adapting the danger zone based on the unloading tube position significantly improves the warning capacity of the harvester.

Preferably, the harvester driving parameter values comprise gear box settings. Thereby, it will be clear for a skilled person that the danger zone is different when the gear box is set in rearward driving, or when the gear box is set in forward driving.

Preferably, the harvester driving parameter values comprise residue spreading system settings. The residue spreading system blows/throws out residue when the combine harvester is harvesting. A situation can occur wherein a person is walking behind a combine harvester that is slowly driving forward but that is not (yet) harvesting. In such situation, the person walking behind the combine harvester is not in a danger zone. However, when the combine harvester is switched to a harvesting state, and the residue spreading system is thereby activated to throw/blow residue out of the back of the harvester, the person is in a danger zone. Using current systems, such described situation (which can be very dangerous for the person behind the harvester) is nearly impossible to detect. Namely, when driving forward, parking sensors and/or rear view sensors are not active so that the person is not detected by the sensors. Furthermore, an operator cannot see objects directly behind the combine harvester. Using the system of the invention, a warning signal can be sent to the operator.

It will be clear that the above mentioned harvester driving parameter values can be combined, and that a danger zone can be defined for each possible combination, such that the danger zone is adjusted each time a driving parameter is adapted. Thereby, a completely dynamic danger zone is obtained.

Preferably, the warning system is output to the operator via at least one of visual and acoustic outputting means. For example, a warning light can be placed in the cabin. Also, an acoustic alarm can be sounded as a warning signal. Alternatively, a visual and an acoustic warning can be combined.

Preferably, the warning signal causes the combine harvester to enter an operational safe mode. Thereby, safe mode is defined as a mode wherein the estimated collision is prevented or at least retarded. An example of a safe state is a predetermined maximum driving speed. It will be clear that when an object is in a danger zone, it is estimated that the combine harvester will collide with the object. By causing the combine harvester to enter an operational safe mode, the operator is not only warned when a dangerous situation occurs, but is also helped to prevent collision.

Preferably, the sensor is formed by at least one radar sensor placed at a back end of the combine harvester. More preferably, the sensor is formed by multiple radar sensors alongside each other to scan the surroundings of the harvester. Radar sensors are known as reliable and cost efficient sensors for determining the position of objects in surroundings of the harvester.

Preferably, a display is provided in the cabin of the harvester to visualize the corresponding danger zone together with the position of the object. Such display provides to the operator a clear view on the position of the object, and a clear view of the danger zone which corresponds to the actual driving parameter values. This would allow the operator to adapt the driving parameter values, as a result of which the danger zone is dynamically adjusted. By visualizing the danger zone on a display, the operator is aided in avoiding collisions and in steering the combine harvester in a safe manner.

The invention further relates to a method for sending a warning signal in a combine harvester having the features of claim 11.

The method of the invention comprises the steps in which the combine harvester of the invention operates. Therefore, the advantages and the effects that are described above in relation to the combine harvester of the invention equally apply to the method of the invention. Therefore, the description above relating to the combine harvester of the invention equally applies to the method of the invention.

The invention will now be described in more details with respect to the drawings illustrating some preferred embodiments of the invention. In the drawings:
figure 1 illustrates a combine harvester with position sensors according to an embodiment of the invention;
figures 2, 3 and 4 illustrate the combine harvester of figure 1 with different sets of driving parameter values, and illustrate the corresponding danger zones.

In the drawings a same reference number has been allocated to a same or analogous element.

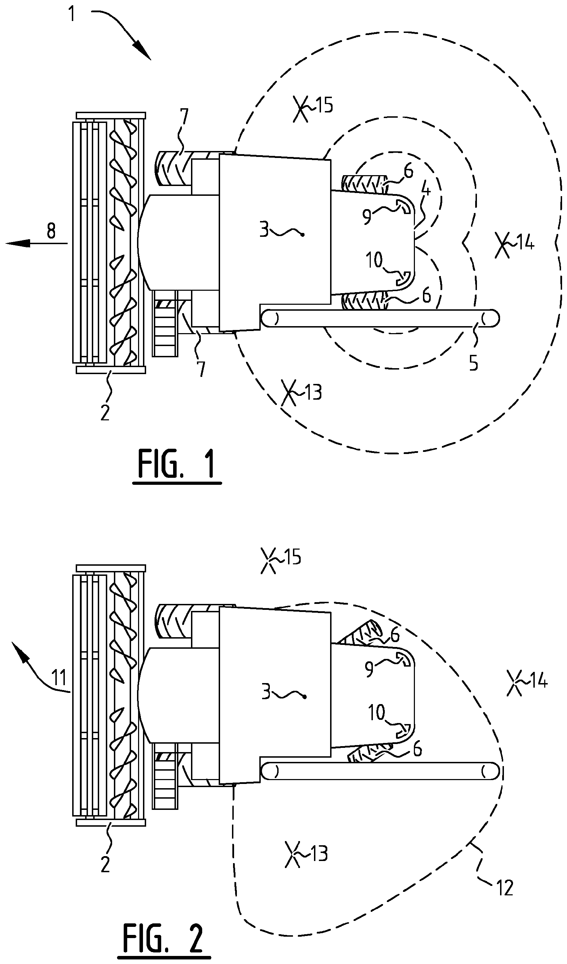

Figure 1 shows a schematic top view of a combine harvester 1. The combine harvester 1 comprises a header 2 that is connected to a body 3. In operation, when the harvester 1 is harvesting a field, the header cuts crop material and transports the crop material into the body 3 of the harvester 1. In the body 3 of the harvester, the crop material is threshed to separate the harvest from the residue material. The residue is distributed onto the field via the residue spreading system 4, that is located at the back end of the body 3 of the harvester 1. The harvest can be stored in the body 3 of the harvester, and can periodically be transported out of the harvester body 3 via the unloading tube 5. Thereby, the unloading tube 5 is rotatable with respect to the harvester body 3, so that the harvest can be unloaded into a filling wagon driving behind or adjacent the harvester 1.

Typically, combine harvesters 1 are steered over a field via turnable back wheels 6. The harvester 1 further comprises front wheels 7, that are typically in a fixed rotational angle with respect to the body 3. The rear wheel steering has as a result that the movement of parts of the combine harvester 1 (such as the back end of the combine harvester or the unloading tube 5) cannot be easily predicted (especially for an unexperienced driver). When the combine harvester 1 is in a straight forward driving mode (as illustrated in figure 1 with arrow 8), dangerous situations can easily be seen by the operator. In the figures 2-4 different situations are illustrated, wherein dangerous situations are much harder to predict, especially by an unexperienced driver.

The combine harvester 1 of the invention is provided with at least one sensor adapted for measuring the position of one or more objects in surroundings of the harvester 1. Thereby, it will be clear that the position of the object is defined as the relative position of the object with respect to the body 3 of the harvester 1. In the example of figure 1, two sensors 9, 10 are placed at the harvester body 3 at respective lateral sides thereof. Each of the sensors 9, 10 is adapted to scan the surroundings over a large angular range, and is capable of measuring object positions from multiple directions in the angular range. Such sensor is known, for example the sonar sensor described in WO 2013/132038, which is referred to for the purpose of explaining the sonar sensor. As an alternative, radar sensors can be placed along the outer periphery of the combine harvester to detect objects in surroundings of the harvester. Such radar sensors are widely used as parking sensors, and based on the present description, the skilled person will be able to configure a radar system comprising one or multiple radar sensors that is able to detect objects in the surroundings of the harvester 1. Thereby, it will be clear that the example shown in figure 1, wherein two sensors 9, 10 are shown that scan the surroundings over a substantially wide angle, is only one possible example of a sensor system. A skilled person will recognize that multiple sensor systems can be used to achieve the same or at least a similar effect. Possible sensors are radar sensors, sonar sensors or cameras (light sensors). In the further description, it is assumed that the sensors 9, 10 measure the position of one or more objects in the surroundings of the harvester, and communicate the position thereof to a processor that is operationally connected to the sensor 9, 10 and to the combine harvester 1. When multiple objects are present in the surroundings of the harvester, the sensor 9, 10 preferably communicates the position of each one of the objects in the surroundings of the harvester 1.

In the figures 1-4, three objects are shown in surroundings of the combine harvester. A first object 13 is located (considering the harvester in forward driving mode) at the left hand side of the body 3 and behind the header 2 of the harvester 1. A second object 14 is located directly behind the body 3 of the harvester 1, being at the back end of the harvester 1. A third object 15 is located at the right hand side of the body 3 of the harvester 1. Whether these objects 13, 14, 15 are in a danger zone, depends on the driving parameter values of the harvester 1, as will be clear from the further description.

Driving parameter values of the harvester 1 are defined as the combination of settings that determine the movement of the harvester 1 and the corresponding extent (coverage on the ground surface) of the combine harvester 1 during that movement. Particularly, the harvester driving parameter values comprise gearbox settings (forward, backward), steering settings (straight, right, left, degree of steering), unloading tube position settings (since the position of the tube influences the coverage on the ground surface) and residue spreading system settings. The skilled person will recognize that further settings can also be taken into account.

Danger zones, in the figures 2-4 being illustrated with dotted lines having reference numbers 12, 17, 18 and 20, are defined as locations where an object is likely to be hit by the combine harvester 1 when the harvester 1 moves further with the corresponding driving parameter values. According to the invention, the danger zone is dynamically defined. Particularly, different danger zones are defined for different sets of driving parameter values. Thereby, the skilled person will understand that there are different ways of achieving such dynamic danger zones. According to one example, a look-up table is provided wherein for each combination of sets of driving parameter values (or sets of ranges of driving parameter values), a danger zone is defined. According to another example, different danger zones are assigned to different driving parameter values and wherein a set of driving parameter values corresponds to a danger zone that is the sum of the danger zones of each parameter. According to a further example, danger zone formulas are defined, wherein driving parameter values are variables that determine the danger zone. According to each of these examples, danger zones can be dynamically defined based on harvester driving parameter values.

Figure 1 shows a first example of a harvester 1 that is set in forward driving mode 8, and wherein the residue spreading system 4 is inactive. With such settings, the danger zone is minimal (and therefore not shown in figure 1). Particularly, objects 13, 14 and 15 will not be hit when the harvester moves in a straight forward direction. As a result none of the objects 13, 14 and 15 is found to be in the danger zone that corresponds to the forward driving mode 8 settings.

In the example of figure 2, the harvester 1 is set to make a forward turn to the right (indicated by arrow 11). Taking into account the harvester driving parameter values corresponding to such turn 11, particularly the angular position of the rear wheels 6 influences the danger zone, which in the example of figure 2 is danger zone 12. Indeed, when the harvester 1 would make a turn to the right as is indicated with arrow 11, the back end of the harvester 1 will swing towards object 13. As can be seen in figure 2, object 13 is in the danger zone 12. Objects 14 and 15 are not in a danger zone, since these objects will not be hit when the harvester makes the turn 11. When the situation as shown in figure 2 occurs, a warning signal is sent to the operator of the harvester 1. The warning signal can be sent in the form of an audible signal (a sound), a visual signal (a lamp), or a combination of the above.

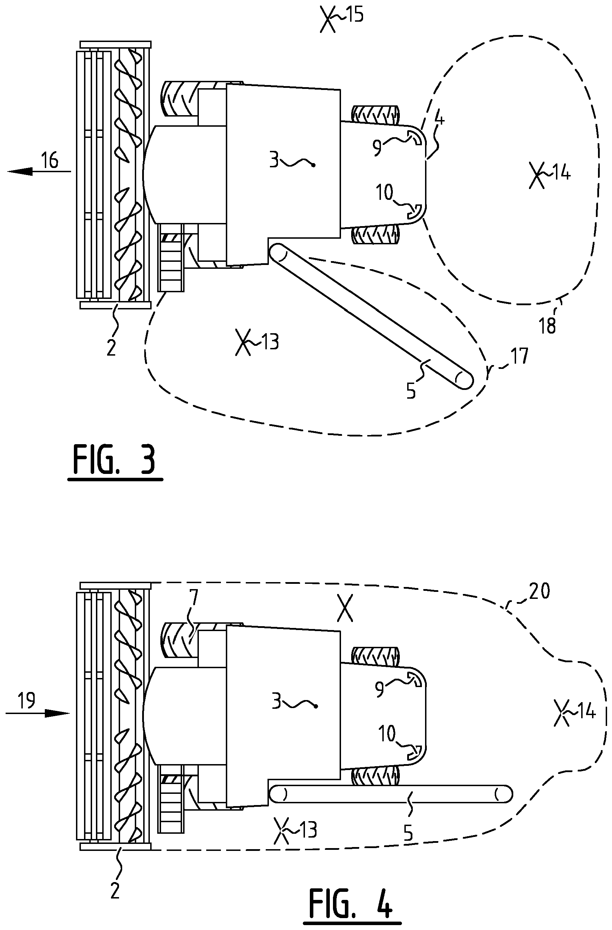

In the example of figure 3, the harvester is in forward driving mode, and the residue spreading system is activated. Furthermore, the unloading tube 5 is rotated to a lateral side of the harvester 1. In such a situation, the rotated unloading tube 5 will result in a danger zone 17, so that object 13 is in danger. The activation of the residue spreading system will result in a further danger zone 18, so that the second object 14 is in danger. This example shows that the danger zone, according to the invention should not be continuous.

In the example of figure 4, the harvester 1 is in rearward driving mode, indicated by arrow 19. In this mode, all of the objects 13, 14 and 15 are in danger zone 20. Indeed, when the harvester would drive in the rearward direction, all of these objects 13, 14, 15 will be hit by the harvester.

The examples show that an object 13, 14, 15 can be in a danger zone in one situation, while it is not in a danger zone in another situation. According to the invention, each of these situations can be individually handled and the operator can be warned when a dangerous situation occurs. This significantly improves the safety of the combine harvester 1 according to the invention. In an embodiment of the system, the warning elements in the harvester comprise a display being provided in the cabin of the harvester, communicating with the processor and adapted to visualize the corresponding danger zone together with the position of the object.

The above described embodiments and the shown figures are illustrative and serve only for a better understanding of the invention. The invention is not limited to the described embodiments. Different alternatives, and preferred features described in the text can be freely combined by a skilled person and developed in more detail to form an operational whole without departing from the claimed invention. The scope of protection of the invention will therefore be defined solely by the claims.

## Claims

1. A combine harvester (1) comprising
a header (2) connected to a body (3),
a residue spreading system (4),
an unloading tube (5), and
a sensor (9, 10) adapted for measuring a position of an object (13, 14, 15) in surroundings of the harvester,
wherein the harvester comprises a memory,
wherein at least two different sets of harvester driving parameter values are stored in relation to at least two different danger zones in the surroundings (12, 17, 18, 20),
wherein a processor is operationally connected to the sensor, to the memory and to the combine harvester for determining actual harvester driving parameter values, and
wherein the processor is provided for comparing the actual harvester driving parameter values with the different sets stored in the memory to select a matching set and to select a corresponding one of the danger zones,
wherein the processor outputs a warning signal if the position of the object is determined to be in the selected danger zone.

2. Combine harvester (1) of claim 1, wherein the harvester driving parameter values comprise a harvester steering wheel (6) position.

3. Combine harvester (1) of claim 1 or 2, wherein the harvester driving parameter values comprise an unloading tube (5) position.

4. Combine harvester of any one of the previous claims, wherein harvester driving parameter values comprise gearbox settings.

5. Combine harvester (1) of any one of the previous claims, wherein harvester driving parameter values comprise residue spreading system (4) settings.

6. Combine harvester (1) of any one of the previous claims, wherein the warning signal is output to the operator via at least one of visual and acoustic outputting means.

7. Combine harvester (1) of any one of the previous claims, wherein the warning signal causes the combine harvester to enter an operational safe mode.

8. Combine harvester (1) of any one of the previous claims, wherein the sensor is formed by at least one radar sensor placed at a back end of the combine harvester.

9. Combine harvester (1) of claim 8, wherein the sensor is formed by multiple radar sensors arranged alongside each other to scan the surroundings of the harvester.

10. Combine harvester (1) of any one of the previous claims, wherein a display is provided in the cabin of the harvester to visualize the corresponding danger zone together with the position of the object.

11. Method for sending a warning signal in a combine harvester (1), the harvester comprising a header (2) connected to a body (3), a residue spreading system (4), un unloading tube (5), and a sensor (9, 10) adapted for measuring a position of an object (13, 14, 15) that is situated in surroundings of the harvester, the method comprising:
defining in the surroundings at least two different danger zones (12, 17, 18, 20) respectively corresponding to at least two different sets of harvester driving parameter values;
detecting an object in the surroundings via said sensor;
wherein the method further comprises, upon detection of the object:
measuring the position of the object in the surroundings;
comparing actual harvester driving parameter values with the different sets to select a matching set and selecting a corresponding one of the danger zones;
determining whether said position is in the corresponding danger zone; and
sending the warning signal if the position is determined to be in the corresponding danger zone.

## Patentansprüche

1. Mähdresch-Erntemaschine (1) mit
einem Vorsatz (2), der mit einem Fahrgestell (3) verbunden ist,
einem Ernterestestreusystem (4),
einem Abtankrohr (5), und
einem Sensor (9, 10), der dazu eingerichtet ist, eine Position eines Objekts (13, 14, 15) in der Umgebung der Erntemaschine zu messen,
wobei die Erntemaschine eine Speichereinrichtung aufweist,
wobei mindestens zwei unterschiedliche Sätze von Erntemaschinen-Fahrparameterwerten in Bezug zu mindestens zwei unterschiedlichen Gefahrenzonen in der Umgebung (12, 17, 18, 20) gespeichert werden,
wobei ein Prozessor wirksam mit dem Sensor, der Speichereinrichtung und der Mähdresch-Erntemaschine zur Bestimmung der aktuellen Erntemaschinen-Fahrparameterwerte verbunden ist, und
wobei der Prozessor dazu vorgesehen ist, die aktuellen Erntemaschinen-Fahrparameterwerte mit den in der Speichereinrichtung gespeicherten unterschiedlichen Sätzen zu vergleichen, um einen passenden Satz auszuwählen und eine entsprechende Gefahrenzone auszuwählen,
wobei der Prozessor ein Warnsignal ausgibt, wenn die Position des Objekts als sich in der ausgewählten Gefahrenzone befindend bestimmt wird.

2. Mähdresch-Erntemaschine (1) nach Anspruch 1, wobei die Erntemaschinen-Fahrparameterwerte eine Position des Erntemaschinenlenkrads (6) aufweisen.

3. Mähdresch-Erntemaschine (1) nach Anspruch 1 oder 2, wobei die Erntemaschinen-Fahrparameterwerte eine Position des Abtankrohres (5) umfassen.

4. Mähdresch-Erntemaschine nach einem der vorhergehenden Ansprüche, wobei die Erntemaschinen-Fahrparameterwerte Getriebeeinstellungen umfassen.

5. Mähdresch-Erntemaschine (1) nach einem der vorhergehenden Ansprüche, wobei die Erntemaschinen-Fahrparameterwerte Einstellungen des Ernterestestreusystems (4) umfassen.

6. Mähdresch-Erntemaschine (1) nach einem der vorhergehenden Ansprüche, wobei das Warnsignal an den Bediener über visuelle und/oder akustische Ausgabemittel ausgegeben wird.

7. Mähdresch-Erntemaschine (1) nach einem der vorhergehenden Ansprüche, wobei das Warnsignal dazu führt, dass die Mähdresch-Erntemaschine in einen betrieblichen Sicherheitsmodus eintritt.

8. Mähdresch-Erntemaschine (1) nach einem der vorhergehenden Ansprüche, wobei der Sensor durch mindestens einen Radarsensor gebildet ist, der an einem hinteren Ende der landwirtschaftlichen Erntemaschine angeordnet ist.

9. Mähdresch-Erntemaschine (1) nach Anspruch 8, wobei der Sensor durch mehrere Radarsensoren gebildet ist, die nebeneinander angeordnet sind, um die Umgebung der Erntemaschine zu scannen.

10. Mähdresch-Erntemaschine (1) nach einem der vorhergehenden Ansprüche, wobei eine Anzeigevorrichtung in der Kabine der Erntemaschine vorgesehen ist, um die entsprechende Gefahrenzone zusammen mit der Position des Objektes zu visualisieren.

11. Verfahren zum Senden eines Warnsignals in einer Mähdresch-Erntemaschine (1), wobei die Erntemaschine einen Vorsatz (2), der mit einem Fahrgestell (3) verbunden ist, ein Ernterestestreusystem (4), ein Abtankrohr (5) und einen Sensor (9, 10) aufweist, der dazu eingerichtet ist, eine Position eines Objekts (13, 14, 15) zu messen, das in der Umgebung der Erntemaschine gelegen ist, wobei das Verfahren folgende Schritte aufweist:
- Definieren von mindestens zwei unterschiedlichen Gefahrenzonen (12, 17, 18, 20) in der Umgebung, die mindestens zwei unterschiedlichen Sätzen von Erntemaschinen-Fahrparameterwerten entsprechen;
- Erfassen eines Objekts in der Umgebung über den Sensor;
wobei das Verfahren bei Erfassung des Objekts des Weiteren aufweist:
- Messen der Position des Objekts in der Umgebung;
- Vergleichen der aktuellen Erntemaschinen-Fahrparameterwerte mit den unterschiedlichen Sätzen, um einen passenden Satz auszuwählen und um eine entsprechende der Gefahrenzonen auszuwählen;
- Bestimmen, ob die Position in der entsprechenden Gefahrenzone liegt; und
- Senden des Warnsignals, wenn die Position als in der entsprechenden Gefahrenzone liegend bestimmt wird.

## Revendications

1. Moissonneuse-batteuse (1) comprenant
une en-tête connectée à un châssis,
un système d'épandage des résidus (4),
une conduite de déchargement (5), et
un capteur (9,10) adapté pour la mesure de la position d'un objet (13, 14, 15) aux abords de la moissonneuse,
la moissonneuse comprenant une mémoire dans laquelle au moins deux ensembles différents de valeurs de paramètres d'entraînement de la moissonneuse sont enregistrés par rapport à au moins deux zones de danger différentes aux abords (12, 17, 18, 20),
dans laquelle un processeur est fonctionnellement relié au capteur, à la mémoire et à la moissonneuse-batteuse afin de déterminer les valeurs réelles de paramètres d'entraînement de la moissonneuse, et
dans laquelle le processeur est prévu pour comparer les valeurs réelles de paramètres d'entraînement de la moissonneuse aux différents ensembles enregistrés dans la mémoire afin de sélectionner un ensemble correspondant à une deszones de danger,
le processeur envoyant un signal d'alarme si la position de l'objet est déterminée comme étant dans la zone de danger sélectionnée.

2. Moissonneuse-batteuse (1) selon la revendication 1, dans laquelle les valeurs de paramètres d'entraînement de la moissonneuse comprennent une position du volant de direction de la moissonneuse (6).

3. Moissonneuse-batteuse (1) selon la revendication 1 ou 2, dans laquelle les valeurs de paramètres d'entraînement de la moissonneuse comprennent une position d'une conduite de déchargement (5).

4. Moissonneuse-batteuse selon l'une quelconque des revendications précédentes, dans laquelle des valeurs de paramètres d'entraînement de la moissonneuse comprennent des valeurs de réglage de la boîte de vitesses.

5. Moissonneuse-batteuse (1) selon l'une quelconque des revendications précédentes, dans laquelle des valeurs de paramètres d'entraînement de lamoissonneuse comprennent des valeurs de réglage du système d'épandage des résidus (4).

6. Moissonneuse-batteuse (1) selon l'une quelconque des revendications précédentes, dans laquelle le signal d'alarme est envoyé à l'opérateur par le biais d'au moins un des moyens d'émission sonores et visuels.

7. Moissonneuse-batteuse (1) selon l'une quelconque des revendications précédentes, dans laquelle le signal d'alarme force la moissonneuse-batteuseà passer en mode sécurité.

8. Moissonneuse-batteuse (1) selon l'une quelconque des revendications précédentes, dans laquelle le capteur est constitué d'au moins un capteur radar placé à l'arrière de la moissonneuse-batteuse.

9. Moissonneuse-batteuse (1) selon la revendication 8, dans laquelle le capteur est constitué de plusieurs capteurs radars placés les uns à côté des autres afin d'explorer es abords de la moissonneuse.

10. Moissonneuse-batteuse (1) selon l'une quelconque des revendications précédentes, dans laquelle un écran est prévu dans la cabine de la moissonneuse pour visualiser la zone de danger correspondante ainsi que la position de l'objet.

11. Procédé pour l'envoi d'un signal d'avertissement dans une moissonneuse-batteuse comprenant une en-tête connectée à un châssis, un système d'épandage des résidus (4), une conduite de déchargement (5), et un capteur (9, 10) adapté pour la mesure de la position d'un objet (13, 14, 15) aux abords de la moissonneuse, et le procédé lequel comprenant:
- la définition d'au moins deux zones de danger différentes (12, 17, 18, 20) aux abords, les zones correspondant respectivement à au moins deux ensembles différents de valeurs de paramètres de conduite de la moissonneuse;
- la détection d'un objet aux abords par le biais dudit capteur;
le procédé comprenant également, en cas de détection de l'objet;
- la mesure de la position de l'objet aux abords;
- la comparaison des valeurs réelles de paramètres d'entraînement de la moissonneuse aux différents ensembles enregistrés dans la mémoire afin de sélectionner un ensemble correspondant à une des zones de danger;
- la détermination du fait que ladite position se trouve dans la zone de danger correspondante; et
- l'envoi du signal d'avertissement si la position de l'objet est déterminée comme étant dans la zone de danger sélectionnée.
